**Europäisches Patentamt**

**European Patent Office**

**Office européen des brevets**

(19)

(11) Veröffentlichungsnummer: **0 017 659**
A2

# EUROPÄISCHE PATENTANMELDUNG

(12)

(21) Anmeldenummer: **79102660.2**

(22) Anmeldetag: **26.07.79**

(51) Int. Cl.³: **B 01 J 37/00, C 01 B 3/00**

(30) Priorität: **27.07.78 CH 8088/78**

(43) Veröffentlichungstag der Anmeldung: **29.10.80**
**Patentblatt 80/22**

(84) Benannte Vertragsstaaten: **BE CH DE FR GB LU NL SE**

(71) Anmelder: **Laboratorium für Festkörperphysik der Eidgenössischen Technischen Hochschule Zürich, Hönggerberg, CH-8093 Zürich (CH)**

(72) Erfinder: **Schlapbach, Louis, Dr., Laboratorium für Festkörperphysik der ETH Zürich, Hönggerberg CH-8093 Zürich (CH)**
Erfinder: **Seiler, Alfred, Laboratorium für Festkörperphysik der ETH Zürich, Hönggerberg CH-8093 Zürich (CH)**
Erfinder: **Stucki, Franz, Laboratorium für Festkörperphysik der ETH Zürich, Hönggerberg CH-8093 Zürich (CH)**

(54) Verfahren zur Erzeugung von Katalysatoren und Reduktionsmittel erhöhter Aktivität und Lebensdauer.

(57) Die Aktivität und Lebensdauer eines metallischen Katalysators werden dadurch erhöht, indem dem Katalysator mindestens ein weiteres Metall zulegiert wird, das folgende zwei Eigenschaften besitzt: (1) es segregiert unter Bildung von kleinen Katalysatorteilchen an der Oberfläche, (2) es schützt die Katalysatorteilchen vor Vergiftung, indem es mit den Vergiftungsstoffen eine stabile, chemische Verbindung eingeht.

EP 0 017 659 A2

## Beschreibung

Das Verfahren zur Erzeugung von Katalysatoren und Reduktionsmittel erhöhter Aktivität und Lebensdauer wird hier beschrieben:

Wie allgemein bekannt ist, werden metallische Katalysatoren und Reduktionsmittel in einer Vielzahl chemischer Prozesse eingesetzt. Als Beispiel sei lediglich die Ammoniaksynthese an Eisen erwähnt. Der Katalysator wird dabei häufig in der Form kleiner Teilchen bzw. einer Anhäufung solcher (z.B. sog. Fe-Schwämme) verwendet, um eine möglichst grosse Reaktionsfläche zu gewährleisten. Die Wirkungsweise der genannten Metallteilchen bezogen auf die genannten Reaktionen wird durch Oberflächenverunreinigung der ersteren stark begrenzt; man spricht vom Vergiften des Katalysators. So führt insbesondere die Oxidation zu einer Begrenzung der Lebensdauer einer chemisch aktiven Metalloberfläche.

Hier will die Erfindung Abhilfe schaffen. Die Erfindung, wie sie in den Ansprüchen gekennzeichnet ist, löst die Aufgabe einen Katalysator bzw. ein Reduktionsmittel erhöhter Aktivität und Lebensdauer zu schaffen, durch Herstellen einer intermetallischen Verbindung, welche den Katalysator und zusätzlich mindestens ein weiteres Metall enthält, wobei letzteres so ausgewählt wird, sodass Oberflächensegregation entweder von selbst auftritt oder durch eine Wärmebehandlung induziert werden kann. Durch diese Oberflächensegregation entstehen nun gleichzeitig einerseits die erwünschten kleinen Teilchen des Katalysators und andererseits Ausscheidungen der dem Katalysator zulegierten weiteren Metalle. Haben nun gerade diese letzteren Stoffe die zweite Eigenschaft mit den in der Katalyse hauptsächlichst auftretenden Katalysatordeaktivierungsstoffen eine chemische Verbindung einzugehen, welche thermodynamisch stabiler ist als die entsprechende chemische Verbindung der Katalysatordeaktivierungsstoffe mit dem Katalysator selbst, so werden auf diese Weise die Katalysator-Teilchen durch die Ausscheidungen der zulegierten Metalle geschützt. Durch die fortschreitende Segregation werden ausserdem ständig neue Katalysator-Teilchen gebildet. Anhand zweier Beispiele sei die Erfindung konkretisiert:

0017659

**a)** Die Verbindung LaNi$_5$ weist bei Zimmertemperatur La-Diffusion zur Oberfläche auf. Dabei entstehen Ni-Teilchen. Sie werden einerseits durch das La, welches ungefähr drei mal stabilere Oxide resp. Hydroxide bildet als das Ni, vor Oxidation - in diesem Fall sind die Katalysatordeaktivierungsstoffe durch Sauerstoff und Wasser gegeben - geschützt und andererseits entstehen durch das Fortschreiten der Segregation immer frische Ni-Teilchen. Der Katalyseprozess kann in diesem Fall beispielsweise darin bestehen, dass H$_2$-Moleküle an der Oberfläche der Ni-Teilchen gespalten werden, worauf die H-Atome in das Wasserstoff-Speichermaterial LaNi$_5$ eindiffundieren können.

**b)** Die Verbindung FeTi stellt einen zum LaNi$_5$ analogen Fall dar, wobei hier der Katalysator durch das Fe gegeben ist und das Ti den, ein (im Vergleich zum Fe) stabiles Oxid bildenden, segregierenden Stoff darstellt. Der Hauptunterschied zur Verbindung LaNi$_5$ liegt in der Temperatur, bei welcher die Segregation in dem Masse auftritt, wie dies für den zu katalysierenden Prozess notwendig ist. Für den oben erwähnten Fall der Wasserstoffabsorbtion liegt diese Temperatur, bei Vorvakuumbedingungen, bei ca. 200$^{\circ}$C.

0017659

## Patentansprüche

1. Verfahren zur Erzeugung von Katalysatoren und Reduktionsmittel erhöhter Aktivität und Lebensdauer dadurch gekennzeichnet, dass einem metallischen Katalysator oder Reduktionsmittel mindestens ein weiteres Metall zulegiert wird, welches an der Oberfläche segregiert oder durch Wärmebehandlung zur Segregation gebracht werden kann und den, durch die Segregation in die Form kleiner Teilchen gebrachten Katalysator beziehungsweise das Reduktionsmittel vor Deaktivierung schützt.

2. Verfahren nach Patentanspruch 1. gekennzeichnet dadurch, dass dieses auf Verbindungen von Metallen der Seltenen Erden inklusive Sc, Y, La, Ca mit d-Uebergangsmetallen angewendet wird.

3. Verfahren nach Patentansprüchen 1. und 2. gekennzeichnet dadurch, dass dieses auf Verbindungen vom Typ $SET_x$, $4.5 < x < 5.5$, SE = Metall der Seltenen Erden, T = d-Uebergangsmetall, angewendet wird.

4. Verfahren nach Patentansprüchen 1., 2. und 3., dadurch gekennzeichnet, dass dieses auf die Verbindung $LaNi_5$ angewendet wird.

5. Verfahren nach Patentansprüchen 1. und 2., dadurch gekennzeichnet, dass dieses auf die Verbindung FeTi angewendet wird.